# EUROPÄISCHE PATENTSCHRIFT

(11) **EP 1 095 078 B1**
(45) Veröffentlichungstag und Bekanntmachung des Hinweises auf die Patenterteilung: **15.06.2005**
(21) Anmeldenummer: 99931146.7
(22) Anmeldetag: 23.06.1999
(51) Int. Cl.: C08F 287/00, C08F 297/04

(54) **SCHLAGZÄHES POLYSTYROL MIT HOHER STEIFIGKEIT UND ZÄHIGKEIT**
HIGHLY RIGID, HIGH-TENACITY IMPACT-RESISTANT POLYSTYRENE
POLYSTYRENE RESISTANT AUX CHOCS A RIGIDITE ET TENACITE ELEVEES

(30) Priorität: 24.06.1998 DE 19828104
(43) Veröffentlichungstag der Anmeldung: 02.05.2001
(73) Patentinhaber: BASF AKTIENGESELLSCHAFT, 67056 Ludwigshafen (DE)
(72) Erfinder: DESBOIS, Philippe, D-67487 Maikammer (DE); SCHADE, Christian, D-67061 Ludwigshafen (DE); GAUSEPOHL, Hermann, D-67112 Mutterstadt (DE); WARZELHAN, Volker, D-67273 Weisenheim (DE)
(86) Internationale Anmeldenummer: PCT/EP1999/004343
(87) Internationale Veröffentlichungsnummer: WO 1999/067308

(56) Entgegenhaltungen:
- WO-A-96/18666
- WO-A-98/07766
- WO-A-98/31721
- WO-A-99/40135
- WO-A-99/40136
- DE-A- 4 235 978
- US-A- 4 153 647

## Beschreibung

Die Erfindung betrifft ein anionisch polymerisiertes, schlagzähes Polystyrol mit einer hohen Steifigkeit und Zähigkeit sowie ein Verfahren zu dessen Herstellung.

Zur Herstellung von schlagzähem Polystyrol sind verschiedene kontinuierliche und diskontinuierliche Verfahren in Lösung oder Suspension bekannt, wie in Ullmanns Enzyklopädie, Vol A21, VCH Verlagsgesellschaft Weinheim 1992, Seiten 615-625 beschrieben. Bei diesen Verfahren wurde ein Kautschuk, üblicherweise Polybutadien in monomerem Styrol gelöst und das Styrol durch thermische oder peroxidische Initiation radikalisch polymerisiert. Neben der Homopolymerisation von Styrol findet auch eine Pfropfpolymerisation von Styrol auf Polybutadien statt. Durch die Bildung von Polystyrol und die gleichzeitige Abnahme des monomeren Styrol findet eine "Phaseninversion" statt. Morphologie, Teilchengröße und Teilchengrößenverteilung der dispersen Kautschukteilchen bestimmen die Eigenschaften des schlagzähen Polystyrols. Sie hängen von verschiedenen Verfahrensparametern, wie Viskosität der Kautschuklösung und Scherkräfte beim Rühren ab.

Verfahren zur Herstellung von thermoplastischen Formmassen durch anionische Polymerisation von Styrol in Gegenwart von Styrol-Butadien-Blockcopolymeren sind beispielsweise aus DE-A-42 35 978, WO 96/18666 oder US 4 153 647 bekannt. Die erhaltenen schlagzäh modifizierten Produkte weisen geringere Restmonomeren- und Oligomerengehalte gegenüber den durch radikalische Polymerisation erhaltenen Produkten auf. Die Zähigkeit von anionisch polymerisierten Produkten ist in der Regel jedoch zu niedrig.

In der WO 98/07766 wird die kontinuierliche Herstellung von schlagzäh modifizierten Formmassen unter Verwendung von Styrol-Butadien-Kautschuken beschrieben. Die Kautschuke wurden unter Verwendung von retardierend wirkenden Zusätzen, wie Erdalkalimetall-, Zink und Aluminiumalkylen in Styrol als Lösungsmittel anionisch polymerisiert. Sie enthalten jedoch in den Butadienblöcken stets geringe Mengen einpolymerisiertes Styrol.

Aufgrund der unterschiedlichen Reaktionsmechanismen zwischen der radikalischen und der anionischen Polymerisation von Styrol sind die von der radikalischen Herstellung von schlagzähem Polystyrol bekannten Verfahrensparameter nicht direkt auf die anionische Polymerisation von Styrol in Gegenwart von Kautschuken übertragbar. So kann beispielsweise nicht ausschließlich Homopolybutadien eingesetzt werden, da bei der anionischen Polymerisation von Styrol keine Pfropfreaktionen auftreten.

Aufgabe der Erfindung war es, ein anionisch polymerisiertes, schlagzähes Polystyrol mit hoher Steifigkeit und Zähigkeit bereitzustellen. Das schlagzähe Polystyrol sollte restmonomeren- und oligomerenarm sein und einen geringen Gehalt an Ethylbenzol aufweisen. Des weiteren sollte ein anionisch polymerisiertes schlagzähes Polystyrol mit Zellteilchenmorphologie sowie ein Verfahren zu dessen Serstellung gefunden werden.

Das erfindungsgemäße, schlagzähe Polystyrol wird durch anionische Polymerisation von Styrol in Gegenwart eines Kautschuks erhalten, wobei man als Kautschuk ein Styrol-Butadien-Styrol-Dreiblockcopolymer mit einem Styrolgehalt von 5 bis 75 Gew.-%, bevorzugt 25 bis 50 Gew.-% verwendet.

Ein nach ISO 3167 hergestellter Probenkörper weist eine Streckspannung von mindestens 24 MPa, gemessen bei 23°C nach DIN 53455 und eine Lochkerbschlagzähigkeit von mindestens 11 KJ/m2, gemessen bei 23°C nach DIN 53753, auf.

Bevorzugt weisen die im Spritzgußverfahren nach ISO 3167 hergestellter Probenkörper eine Streckspannung von mindestens 27, besonders bevorzugt im Bereich von 30 bis 50 MPa, gemessen bei 23°C nach DIN 53455 und eine Lochkerbschlagzähigkeit von mindestens 13, besonders bevorzugt im Bereich von 15 bis 30 KJ/m², gemessen bei 23°C nach DIN 53753, auf. In der Regel liegen die Werte für die Streckspannung bei gepreßten Probekörpern (z.B. DIN 16770, Teil 1} um 20 bis 30 %, die der Lochkerbschlagzähigkeit um 30 bis 40 % unter den an spritzgegossenen Probekörpern gemessenen Werten.

Das aus Streckspannung und Lochkerbschlagzähigkeit gebildete Verhältnis weist im allgemeinen einen Zahlenwert von mindestens 1,5, bevorzugt von mindestens 2 auf.

Bevorzugt enthält die disperse Weichphase des erfindungsgemäßen, schlagzähen Polystyrol ein Styrol-Butadien-Blockcopolymer und weist eine Zellteilchenmorphologie auf.

Im erfindungsgemäßen Polystyrol verwendet man als Kautschuk ein unsymmetrisches Styrol-Butadien-Styrol Dreiblockcopolymer S₁-B-S₂, wobei S₁ einen Styrolblock mit einem gewichtsmittleren Molekulargewicht M_{w} im Bereich von 10000 bis 40000 g/mol, B einen Butadienblock mit einem gewichtsmittleren Molekulargewicht M_{w} im Bereich von 70000 bis 250000 g/mol und S₂ einen Styrolblock mit einem gewichtsmittleren Molekulargewicht M_{w} im Bereich von 50000 bis 200000 g/mol bedeuten.

Der Restbutadiengehalt der verwendeten Styrol-Butadien-Blockcopolymeren und des Homopolybutadiens sollte unter 200 ppm, bevorzugt unter 50 ppm, insbesondere unter 5 ppm liegen.

Der Kautschukgehalt, bezogen auf das schlagzähe Polystyrol beträgt zweckmäßigerweise 5 bis 25 Gew.-%.

Der Umsatz, bezogen auf Styrol der Hartmatrix beträgt in der Regel über 90 %, bevorzugt über 99 %. Das Verfahren kann prinzipiell auch zu einem vollständigen Umsatz führen.

Anstelle von Styrol können auch andere vinylaromatischen Monomeren für die Polymerisation der Hartmatrix oder der Styrolblöcke in den Blockcopolymeren verwendet werden. Beispielsweise eignen sich auch Styrol, α-Methylstyrol, p-Methylstyrol, Ethylstyrol, tert.-Butylstyrol, Vinyltoluol, 1,2-Diphenylethylen oder 1,1-Diphenylethylen oder Mischungen. Besonders bevorzugt wird Styrol eingesetzt.

Anstelle von Butadien können die Kautschuke auch andere Diene, beispielsweise 1,3-Pentadien, 2,3-Dimethyl-butadien, Isopren oder Mischungen davon, enthalten.

Üblicherweise werden als anionische Polymerisationsinitiatoren mono-, bi- oder multifunktionellen Alkalimetallalkyle, -aryle oder -aralkyle eingesetzt. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol. Die benötigte Menge an Alkalimetallorganyl richtet sich nach dem gewünschten Molekulargewicht, der Art und Menge der weiteren eingesetzten Metallorganyle sowie der Polymerisationstemperatur. In der Regel liegt sie im Bereich von 0,002 bis 5 Molprozent bezogen auf Gesamtmonomerenmenge.

Die Polymerisation kann in Abwesenheit oder in Gegenwart eines Lösungsmittels durchgeführt werden. Die Polymerisation erfolgt zweckmäßigerweise in einem aliphatischen, isocyclischen oder aromatischen Kohlenwasserstoff oder Kohlenwasserstoffgemisch, wie Benzol, Toluol, Ethylbenzol, Xylol, Cumol, Hexan, Heptan, Octan oder Cyclohexan. Bevorzugt werden Lösungsmittel mit einem Siedepunkt oberhalb 95°C verwendet. Besonders bevorzugt wird Toluol verwendet.

Zur Kontrolle der Reaktionsgeschwindigkeit können polymerisationsgeschwindigkeitsvermindernde Zusätze, sogenannte Retarder wie in WO 98/07766 beschrieben, zugegeben werden. Als Retarder eignen sich beispielsweise Metallorganyle eines Elementes der zweiten oder dritten Hauptgruppe oder der zweiten Nebengruppe des Periodensystems. Beispielsweise können die Organyle der Elemente Be, Mg, Ca, Sr, Ba, B, Al, Ga, In, Tl, Zn, Cd, Hg verwendet werden. Bevorzugt werden die Magnesium- und Aluminiumorganyle verwendet. Als Organyle werden die metallorganischen Verbindungen der genannten Elemente mit mindestens einer Metall-Kohlenstoff σ-Bindung verstanden, insbesondere die Alkyl- oder Arylverbindungen. Daneben können die Metallorganyle noch Wasserstoff, Halogen oder über Heteroatome gebundene organische Reste, wie Alkoholate oder Phenolate, am Metall enthalten. Letztere sind beispielsweise durch ganze oder teilweise Hydrolyse, Alkoholyse oder Aminolyse erhältlich. Es können auch Mischungen verschiedener Metallorganyle verwendet werden.

Geeignete Magnesiumorganyle sind solche der Formel R₂Mg, wobei die Reste R unabhängig voneinander Wasserstoff, Halogen, C₁-C₂₀-Alkyl oder C₆-C₂₀-Aryl bedeuten. Bevorzugt werden Dialkylmagnesiumverbindungen, insbesondere die als Handelsprodukte verfügbaren Ethyl-, Propyl-, Butyl-, Hexyl- oder Octylverbindungen eingesetzt. Besonders bevorzugt wird das in Kohlenwasserstoffen lösliche (n-Butyl)(s-Butyl)magnesium eingesetzt.

Als Aluminiumorganyle können solche der Formel R₃Al verwendet werden, wobei die Reste R unabhängig voneinander Wasserstoff, Halogen, C₁-C₂₀-Alkyl oder C₆-C₂₀-Aryl bedeuten. Bevorzugte Aluminiumorganyle sind die Aluminiumtrialkyle wie Triethylaluminium, Tri-iso-Butylaluminium, Tri-n-butylaluminium, Tri-isopropylaluminium, Tri-n-hexylaluminium. Besonders bevorzugt wird Triisobutylaluminium eingesetzt. Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen. Beispiele sind Diethylaluminium-ethoxid, Diisobutylaluminium-ethoxid, Diisobutyl-(2,6-di-tert.-butyl-4-methyl-phenoxy)aluminium (CAS-Nr. 56252-56-3), Methylaluminoxan, isobutyliertes Methylaluminoxan, Isobutylaluminoxan, Tetraisobutyldialuminoxan oder Bis(diisobutyl)aluminiumoxid.

Besonders bevorzugt führt man die Polymerisation des Styrol in Gegenwart einer Trialkylaluminium- und/oder Dialkylmagnesiumverbindung durch.

In der Regel wirken die beschriebenen Retarder nicht als Polymerisationsinitiatoren. Es wurde jedoch gefunden, daß die Polymerisation der Hartmatrix ohne weiteren Zusatz eines anionischen Polymerisationsinitiators ausgeführt werden kann, wenn man direkt eine Kautschuklösung verwendet, die durch anionische Polymerisation mittels einem anionischen Polymerisationsinitiator gestartet und anschließend durch Kettenabbruch bzw. Kopplung terminiert wurde. In diesem Falle können die sonst nur retardierend wirkenden Metallalkyle die Polymerisation der Hartmatrix initiieren. Dadurch ergibt sich eine einfachere Dosierung und Steuerung als bei Verwendung von einer Initiator/Retardermischung.

Ein Gehalt an Mg im Bereich von 0,1 bis 100 mmol/kg und/oder einen Gehalt an Al im Bereich von 0,01 bis 50 mmol/kg, jeweils bezogen auf das schlagzähe Polystyrol, führt in der Regel zu keinem nennenswerten Abfall der mechanischen Eigenschaften.

Zur Erhöhung der Reißdehnung kann in dem erfindungsgemäßen Verfahren 0,1 bis 10 Gew.-%, bevorzugt 0,5 bis 5 Gew.-% Mineralöl, bezogen auf das schlagzähe Polystyrol, zugesetzt werden.

Die Polymerisation der Styrolhartmatrix kann absatzweise oder kontinuierlich in Rührkesseln, Kreislaufreaktoren, Rohrreaktoren, Turmreaktoren oder Ringscheibenreaktoren polymerisiert werden, wie in WO 97/07766 beschrieben.

Der Gehalt an Styrolmonomeren im schlagzähen Polystyrol beträgt in der Regel maximal 50 ppm, vorzugsweise maximal 10 ppm und der Gehalt an Styroldimeren- und Styroltrimeren maximal 500 ppm, vorzugsweise maximal 200 ppm, besonders bevorzugt weniger als 100 ppm. Der Gehalt an Ethylbenzol liegt bevorzugt unter 5 ppm.

Es kann zweckmäßig sein, durch entsprechende Temperaturführung in einem Entgaser oder Entgasungsextruder und/oder durch Zusatz von Peroxiden, insbesondere solche mit hoher Zerfallstemperatur wie beispielsweise Dicumylperoxid, eine Vernetzung der Kautschukpartikel zu erreichen.

Den erfindungsgemäßen Polymeren können weitere übliche Hilfsmittel wie Stabilisatoren, Gleitmittel, Flammschutzmittel, Antielektrostatika etc. zugesetzt werden.

Das erfindungsgemäße, schlagzähe Polystyrol eignet sich zur Herstellung von Fasern, Folien und Formkörpern.

### Beispiele

### Meßmethoden:

Die Molekulargewichte und Molekulargewichtsverteilungen wurden mittels Gelpermeationschromatographie (GPC) in Tetrahydrofuran und Auswertung der erhalten Chromatogramme unter Verwendung einer Polystyrol- bzw. Polybutadieneichung ermittelt.

Der Styrolgehalt und der 1,2-Vinylgehalt des Butadienanteils im Kautschuk wurde durch Auswertung der ¹H-kernresonanzspektroskopischen Daten bestimmt.

Für die mechanischen und physikalischen Messungen der schlagzähen Polystyrole wurden gepreßte (DIN 16770 - Teil 1) bzw. gespritzte (ISO 3167) Probenkörper hergestellt. Die Streckspannung und Reißdehnung wurden bei 23°C nach DIN 53455 bestimmt. Die Lochkerbschlagzähigkeit wurde nach DIN 53753 bei 23°C an gepressten Probekörpern mit den Abmessungen 50 mm * 6 mm * 4 mm (Lochdurchmesser: 3 mm) oder gespritzten Probekörpern mit den Abmessungen 80 mm * 10 mm * 4 mm durchgeführt. Falls nicht anders vermerkt, wurden die Messungen an gepreßten Probenkörpern durchgeführt.

### Synthese von Kautschuklösungen

### Beispiel K8 (S-B-S-Dreiblockcopolymer)

In einem 50 l fassenden Rührkessel wurden 13,8 kg trockenes Toluol vorgelegt und unter Rühren mit 228 g Styrol und 14,2 ml einer 1,33 molaren Lösung von s-Butyllithium in Cyclohexan versetzt. Die Lösung wurde innerhalb von 15 min auf 50°C aufgeheizt. Sodann wurden 3570 g Butadien innerhalb von 25 min zugegeben, wobei die Innentemperatur bis auf 74 °C stieg. Die Mischung wurde weitere 30 min bei 65°C gerührt. Anschließend wurden 2100 g Styrol zugegeben. Die Temperatur stieg zwischenzeitlich bis auf 70°C. Nach 60 min wurden 1,4 ml Isopropanol zum Reaktionsansatz gegeben. Die Lösung hatte zu diesem Zeitpunkt einen Feststoffgehalt von 30 Gew.-%. Durch Zugabe von Styrol zu dem Ansatz wurde ein Feststoffgehalt von 15 Gew.-% eingestellt. GPC-Analyse der erhaltenen Polymermischung zeigte eine Verteilung mit einem Haupt-Molmassenpeak Mₚ = 296000 g/mol und einer Schulter bei Mₚ = 225000 g/mol im Vergleich zu einer Polybutadien-Eichung. Der Restbutadiengehalt war kleiner als 10 ppm. Nach ¹H-NMR betrug der Styrolgehalt des isolierten Kautschuks 39 %; der Butadienanteil des Kautschuks lag zu 11 % in der 1,2-Vinylform vor. Die Lösungsviskosität einer 5,43%igen Lösung des Kautschuks in Toluol betrug 54 mPas.

### Beispiel K9 (S-B-S-Dreiblockcopolymer mit Blocklängenverhältnis 10/150/70)

In einem 50 l fassenden Rührkessel wurden 13,8 kg trockenes Toluol vorgelegt. Die Mischung wurde auf 40°C aufgewärmt und bei dieser Temperatur mit 119,9 ml einer 0,24 molaren Lösung von sec.-Butyllithium in Cyclohexan versetzt. Die Lösung wurde unter Rühren mit 287 g Styrol versetzt und innerhalb von 60 min auf 45°C aufgeheizt. Weitere 3230 g Butadien wurden innerhalb von 39 min bei einer Innentemperatur von 52,5°C zugegeben. Die Mischung wurde weitere 51 min bei 52,5°C gerührt. Anschließend wurden 2022 g Styrol zugegeben. Die Temperatur steigt zwischenzeitlich bis auf 56°C. Nach 93 min wurden 2,2 ml Isopropanol zum Reaktionsansatz gegeben. Die Lösung besitzt zu diesem Zeitpunkt einen Feststoffgehalt von 30 Gew.-%. Durch Zugabe von 30 kg Styrol wurde eine Kautschuklösung mit einem Feststoffgehalt von 11,5 Gew.-% erhalten. GPC-Analyse der erhaltenen Polymermischung zeigte eine Verteilung mit einem Haupt-Molmassenpeak Mp = 230000 g/mol. Die jeweiligen Blocklängen betrugen 10000/150000/70000 g/mol. Der Restbutadiengehalt war kleiner als 10 ppm. Nach ¹H-NMR lag der Butadienanteil des Kautschuks zu 12 % in der 1,2-Vinylform vor. Die Lösungsviskosität einer 5,43%igen Lösung des Kautschuks in Toluol betrug 39,3 mPas.

### Beispiel K10 (S-B-S-Dreiblockcopolymer mit Blocklängenverhältnis 15/180/110)

In einem 50 l fassenden Rührkessel wurden 13,8 kg trockenes Toluol vorgelegt. Die Mischung wurde auf 42°C aufgewärmt und bei dieser Temperatur mit 91 ml einer 0,24 molaren Lösung von sec.-Butyllithium in Cyclohexan versetzt. Die Lösung wurde unter Rühren mit 320 g Styrol versetzt und innerhalb von 68 min auf 42°C aufgeheizt. Weitere 3570 g Butadien wurden innerhalb von 80 min bei einer Innentemperatur von 44°C zugegeben. Die Mischung wurde weitere 8 min bei 65°C gerührt. Anschließend wurden 2008 g Styrol zugegeben. Die Temperatur steigt zwischenzeitlich bis auf 46°C. Nach 73 min wurden 1,7 ml Isopropanol zum Reaktionsansatz gegeben. Die Lösung besitzt zu diesem Zeitpunkt einen Feststoffgehalt von 30 Gew.-%. Durch Zugabe von 17,2 kg Styrol wurde eine Kautschuklösung mit einem Feststoffgehalt von 16 Gew.-% erhalten. GPC-Analyse der erhaltenen Polymermischung zeigte eine Verteilung mit einem Haupt-Molmassenpeak Mₚ = 305000 g/mol. Die jeweiligen Blocklängen betrugen 15000/180000/110000 g/mol. Der Restbutadiengehalt war kleiner als 10 ppm. Nach ¹H-NMR lag der Butadienanteil des Kautschuks zu 11 % in der 1,2-Vinylform vor. Die Lösungsviskosität einer 5,43%igen Lösung des Kautschuks in Toluol betrug 57,0 mPas.

### Beispiel K11 (S-B-S-Dreiblockcopolymer mit Blocklängenverhältnis 15/175/130)

In einem 50 l fassenden Rührkessel wurden 13,8 kg trockenes Toluol vorgelegt. Die Mischung wurde auf 40°C aufgewärmt und bei dieser Temperatur mit 86,9 ml einer 0,24 molaren Lösung von sec.-Butyllithium in Cyclohexan versetzt. Die Lösung wurde unter Rühren mit 300 g Styrol versetzt und innerhalb von 67 min auf 41°C erwärmt. Weitere 3570 g Butadien wurden innerhalb von 52 min bei einer Innentemperatur von 46°C zugegeben. Die Mischung wurde weitere 30 min bei 65°C gerührt. Anschließend wurden 2028 g Styrol zugegeben. Die Temperatur stieg zwischenzeitlich bis auf 46°C. Nach 117 min wurden 1,6 ml Isopropanol zum Reaktionsansatz gegeben. Die Lösung besitzt zu diesem Zeitpunkt einen Feststoffgehalt von 30 Gew.-%. Durch Zugabe von 17,2 kg Styrol wurde eine Kautschuklösung mit einem Feststoffgehalt von 16 Gew.-% erhalten. GPC-Analyse der erhaltenen Polymermischung zeigte eine Verteilung mit einem Haupt-Molmassenpeak Mₚ = 320000 g/mol. Die jeweiligen S-B-S Blocklängen betrugen 15000/175000/130000 g/mol. Der Restbutadiengehalt war kleiner als 10 ppm. Nach ¹H-NMR lag der Butadienanteil des Kautschuks zu 11 % in der 1,2-Vinylform vor. Die Lösungsviskosität einer 5,43%igen Lösung des Kautschuks in Toluol betrug 82,2 mPas.

### Beispiel K12 (S-B-S-Dreiblockcopolymer mit Blocklängenverhältnis 14/230/95)

In einem 50 l fassenden Rührkessel wurden 13,8 kg trockenes Toluol vorgelegt. Die Mischung wurde auf 40°C aufgewärmt und bei dieser Temperatur mit 75,4 ml einer 0,24 molaren Lösung von sec.-Butyllithium in Cyclohexan versetzt. Die Lösung wurde unter Rühren mit 260 g Styrol versetzt und innerhalb von 73 min auf 40°C erwärmt. Weitere 3570 g Butadien wurden innerhalb von 40 min bei einer Innentemperatur von 44°C zugegeben. Die Mischung wurde weitere 45 min bei 44°C gerührt. Anschließend wurden 2068 g Styrol zugegeben. Die Temperatur stieg zwischenzeitlich bis auf 56°C. Nach 110 min wurden 1,4 ml Isopropanol zum Reaktionsansatz gegeben. Die Lösung besaß zu diesem Zeitpunkt einen Feststoffgehalt von 30 Gew.-%. Durch Zugabe von 17,2 kg Styrol wurde die Kautschuklösung auf einem Feststoffgehalt von 15,9 Gew.-% verdünnt. GPC-Analyse der erhaltenen Polymermischung zeigte eine Verteilung mit einem Haupt-Molmassenpeak Mp = 339000 g/mol. Die jeweiligen Blocklängen betrugen 14000/230000/95000 g/mol. Der Restbutadiengehalt war kleiner als 10 ppm. Nach ¹H-NMR lag der Butadienanteil des Kautschuks zu 11 % in der 1,2-Vinylform vor. Die Lösungsviskosität einer 5,43%igen Lösung des Kautschuks in Toluol betrug 74,5 mPas.

### Beispiel K13 (S-B-S-Dreiblockcopolymer mit Blocklängenverhältnis 15/120/70)

In einem 50 l fassenden Rührkessel wurden 13,8 kg trockenes Toluol vorgelegt. Die Mischung wurde auf 40°C aufgewärmt und bei dieser Temperatur mit 119,9 ml einer 0,24 molaren Lösung von sec.-Butyllithium in Cyclohexan versetzt. Die Lösung wurde unter Rühren mit 425 g Styrol versetzt und innerhalb von 60 min auf 45°C erwärmt. Weitere 3450 g Butadien wurden innerhalb von 39 min bei einer Innentemperatur von 52,5°C zugegeben. Die Mischung wurde weitere 51 min bei 52,5°C gerührt. Anschließend wurden 2022 g Styrol zugegeben. Die Temperatur steigt zwischenzeitlich bis auf 56°C. Nach 93 min wurden 2,2 ml Isopropanol zum Reaktionsansatz gegeben. Die Lösung besitzt zu diesem Zeitpunkt einen Feststoffgehalt von 30 Gew.-%. Durch Zugabe von 17,2 kg Styrol wurde eine Kautschuklösung mit einem Feststoffgehalt von 16,0 Gew.-% erhalten. GPC-Analyse der erhaltenen Polymermischung zeigte eine Verteilung mit einem Haupt-Molmassenpeak Mp = 205000 g/mol. Die jeweiligen S-B-S-Blocklängen betrugen 15000/120000/70000 g/mol. Der Restbutadiengehalt war kleiner als 10 ppm. Nach ¹H-NMR lag der Butadienanteil des Kautschuks zu 12 % in der 1,2-Vinylform vor. Die Lösungsviskosität einer 5,43%igen Lösung des Kautschuks in Toluol betrug 28,7 mPas.

### HIPS-Synthesen

### Beispiel H6

Für die kontinuierliche Polymerisation wurde ein doppelwandiger, 1,9-l-Rührkessel mit einem Standard-Ankerrührer verwendet. Der Reaktor war für einen Druck von 60 bar ausgelegt und mit einem Wärmeträgermedium für eine isotherme Polymerisationsführung temperiert.

In den Rührkessel wurden unter Rühren (100 Umdrehungen pro Minute) kontinuierlich 280 g/h Styrol, 796 g/h der Kautschuklösung aus Beispiel K8 und eine Lösung aus 19 g/h einer 0,16 molaren Lösung von (n-Butyl)(s-butyl)magnesium in Heptan/ Toluol (Gew.-Verhältnis 1:4) dosiert und bei einer konstanten Massetemperatur von 94°C gerührt.

Der Austrag des Rührkessels wurde in zwei nacheinander geschaltete, jeweils gerührte und 4 Liter fassende Turmreaktoren weitergefördert. Der erste Turmreaktor wurde bei einer Innentemperatur von 102°C betrieben. Im zweiten Turmreaktor wurde über zwei gleich lange, nacheinander angeordnete Heizzonen die Temperatur so eingestellt, daß die Innentemperatur am Ende der ersten Zone 122°C, am Ende der zweiten Zone 160°C betrug. Am Austritt des Turmreaktors wurde die Polymerisationsmischung über einen Mischer mit 5 g/h einer Mischung aus Methanol/Wasser 1:1 versetzt, anschließend durch ein auf 260°C beheiztes Rohrstück geführt und über ein Druckregelventil in einen auf 25 mbar gehaltenen Vakuumtopf entspannt. Die Schmelze wurde mit einer Schnecke ausgetragen und granuliert.

Nach wenigen Stunden stellte sich ein stabiler Gleichgewichtszustand in allen Anlagenteilen ein. Der Druckabfall über die gesamte Anlage betrug 2,8 bar. Der Feststoffgehalt am Ausgang des Rührkessels betrug 37 Gew.-%, am Ausgang des ersten Turmreaktors 58 Gew.-%. Am Ausgang des zweiten Turmreaktors wurde ein quantitativer Umsatz festgestellt. Die Polystyrol-Matrix besaß ein Molekulargewicht von M_{w} = 152000 g/mol und eine Uneinheitlichkeit M_{w}/Mₙ von 2,62. Die Verteilung war monomodal. Es wurde ein Gehalt von unter 5 ppm Styrol, unter 5 ppm Ethylbenzol und 52 ppm Toluol bestimmt. Das Material besaß eine Streckspannung von 28 N/mm², eine Lochkerbschlagzähigkeit von 13 kJ/m², eine Wärmeformbeständigkeit (Vicat B/50) von 94°C und eine Schmelze-Volumenrate MVR 200/5 von 3,9 cm³/10 min . Eine elektronenmikroskopische Aufnahme zeigte eine Zellenteilchenmorphologie. Der mittlere Teilchendurchmesser betrug 3,2 µm.

### Beispiel H7

Für die kontinuierliche Polymerisation wurde ein doppelwandiger, 1,9-l Rührkessel mit einem Standard-Ankerrührer verwendet. Der Reaktor war für einen Druck von 25 bar ausgelegt und mit einem Wärmeträgermedium für eine isotherme Polymerisationsführung temperiert. In den Rührkessel wurden unter Rühren (100 Umdrehungen pro Minute) kontinuierlich 71 g/h Styrol, 968 g/h der Kautschuklösung aus Beispiel K9 und eine Lösung aus 15 g/h einer 0,8 molaren Lösung von (n-Butyl)(s-butyl)magnesium in Heptan, die im Gew.-Verhältnis 1:4 mit Toluol verdünnt worden war, dosiert und bei einer konstanten Massetemperatur von 93,0°C gerührt.

Die Lösung wurde in einen gerührten 4 Liter Turmreaktor weitergefördert, der mit zwei gleich großen Heizzonen versehen war. Die erste Zone wurde auf eine Innentemperatur von 121°C, die zweite auf 161°C eingeregelt. Der Austrag des Reaktors wurde mit 11 g/h einer 50 gew.-%igen Lösung aus Methanol in Wasser versetzt, über einen Mischer und anschließend ein auf 240°C beheiztes Rohrstück geführt und über ein Druckregelventil in einen bei 10 mbar betriebenen Vakuumtopf entspannt. Die Schmelze wurde mit einer Schnecke ausgetragen und granuliert.

Nach kurzer Zeit stellte sich ein konstanter Fahrzustand ein. Der Feststoffgehalt betrug am Ausgang des ersten Kessels 35 Gew.-%. Am Austrag der kontinuierlichen Anlage wurde ein quantitativer Umsatz festgestellt. Die Polystyrol-Matrix besaß ein Molekulargewicht von Mw = 187000 g/mol und eine Uneinheitlichkeit Mw/Mn von 2,83; die Verteilung war monomodal.

Es wurde ein Gehalt von unter 5 ppm Styrol, unter 5 ppm Ethylbenzol bestimmt. Das Material besaß eine Streckspannung von 25,4 N/mm², eine Lochkerbschlagzähigkeit von 18,1 kJ/m², eine Wärmeformbeständigkeit (Vicat B/50) von 92,4°C und einen Meltfließindex von 4,7 cm³/10 min bei 200°C.

### Beispiel H8

Für die kontinuierliche Polymerisation wurde ein doppelwandiger 1,9-l-Rührkessel mit einem Standard-Ankerrührer verwendet. Der Reaktor war für einen Druck von 25 bar ausgelegt und mit einem Wärmeträgermedium für eine isotherme Polymerisationsführung temperiert. In den Rührkessel wurden unter Rühren (100 Umdrehungen pro Minute) kontinuierlich 381 g/h Styrol, 659 g/h der Kautschuklösung aus Beispiel K10 und eine Lösung aus 13,6 g/h einer 0,8 molaren Lösung von (n-Butyl)(s-butyl)magnesium in Heptan, die im Gew.-Verhältnis 1:4 mit Toluol verdünnt worden war, dosiert und bei einer konstanten Massetemperatur von 95,2°C gerührt.

Die Lösung wurde in einen gerührten 4 Liter Turmreaktor weitergefördert, der mit zwei gleich großen Heizzonen versehen war. Die erste Zone wurde auf eine Innentemperatur von 129°C, die zweite auf 160°C eingeregelt. Der Austrag des Reaktors wurde mit 11 g/h einer 50 gew.-%igen Lösung aus Methanol in Wasser versetzt, über einen Mischer und anschließend ein auf 240°C beheiztes Rohrstück geführt und über ein Druckregelventil in einen bei 10 mbar betriebenen Vakuumtopf entspannt. Die Schmelze wurde mit einer Schnecke ausgetragen und granuliert.

Nach kurzer Zeit stellte sich ein konstanter Fahrzustand ein. Der Feststoffgehalt betrug am Ausgang des ersten Kessels 35 Gew.-%. Am Austrag der kontinuierlichen Anlage wurde ein quantitativer Umsatz festgestellt. Die Polystyrol-Matrix besaß ein Molekulargewicht von Mw = 173000 g/mol und eine Uneinheitlichkeit Mw/Mn von 3,14; die Verteilung war monomodal.

Es wurde ein Gehalt von unter 5 ppm Styrol, unter 5 ppm Ethylbenzol bestimmt.

In analoger Weise wurden die Beispiele H8-1 und H8-2 unter Verwendung von Mineralöl als Zusatz in den Mischer nach dem Turmreaktor durchgeführt. Parameter der Versuchsdurchführung und Eigenschaften der erhaltenen Polymere sind in der Tabelle 2 zusammengestellt.

**Tabelle 2**

| Beispiel | | H8 | H8-1 | H8-2 |
|---|---|---|---|---|
| Mineralölgehalt (bezogen auf schlagfestes Polystyrol) | [%] | 0 % | 1 % | 2 % |
| Streckspannung | [N/mm²] | 28 | 27,0 | 24,7 |
| Reißdehnung | [%] | 7 | 17.0 | 21,0 |
| Lochkerbschlagzähigkeit | [kJ/m²] | 12 | 14,1 | 15,8 |
| Schmelzevolumenrate | [cm³/10 mn] | 4 | 4,2 | 4,7 |
| Wärmeformbeständigkeit Vicat-Erweichungstemperatur B/50 | [°C] | 94 | - | 90,0 |

### Beispiel H9

Für die kontinuierliche Polymerisation wurde ein doppelwandiger 1,9-l-Rührkessel mit einem Standard-Ankerrührer verwendet. Der Reaktor war für einen Druck von 25 bar ausgelegt und mit einem Wärmeträgermedium für eine isotherme Polymerisationsführung temperiert. In den Rührkessel wurden unter Rühren (100 Umdrehungen pro Minute) kontinuierlich 368 g/h Styrol, 649 g/h der Kautschuklösung aus Beispiel K11 und eine Lösung aus 13,6 g/h einer 0,8 molaren Lösung von (n-Butyl)(s-butyl)magnesium in Heptan, die im Gew.-Verhältnis 1:4 mit Toluol verdünnt worden war, dosiert und bei einer konstanten Massetemperatur von 95,6°C gerührt.

Die Lösung wurde in einen gerührten 4 Liter Turmreaktor weitergefördert, der mit zwei gleich großen Heizzonen versehen war. Die erste Zone wurde auf eine Innentemperatur von 128°C, die zweite auf 159,5°C eingeregelt. Der Austrag des Reaktors wurde mit 11 g/h einer 50 gew.-%igen Lösung aus Methanol in Wasser versetzt, über einen Mischer und anschließend ein auf 240°C beheiztes Rohrstück geführt und über ein Druckregelventil in einen bei 10 mbar betriebenen Vakuumtopf entspannt. Die Schmelze wurde mit einer Schnecke ausgetragen und granuliert.

Nach kurzer Zeit stellte sich ein konstanter Fahrzustand ein. Der Feststoffgehalt betrug am Ausgang des ersten Kessels 34,9 Gew.-%. Am Austrag der kontinuierlichen Anlage wurde ein quantitativer Umsatz festgestellt. Die Polystyrol-Matrix besaß ein Molekulargewicht von Mw = 173000 g/mol und eine Uneinheitlichkeit Mw/Mn von 3,06; die Verteilung war monomodal.

Es wurde ein Gehalt von unter 5 ppm Styrol, unter 5 ppm Ethylbenzol bestimmt. Das Material besaß eine Streckspannung von 24,7 N/mm², eine Lochkerbschlagzähigkeit von 13,3 kJ/m², eine Wärmeformbeständigkeit (Vicat B/50) von 91,4°C und einen Meltfließindex von 5,8 cm³/10 min bei 200°C.

### Beispiel H10

Für die kontinuierliche Polymerisation wurde ein doppelwandiger 1,9-l-Rührkessel mit einem Standard-Ankerrührer verwendet. Der Reaktor war für einen Druck von 25 bar ausgelegt und mit einem Wärmeträgermedium für eine isotherme Polymerisationsführung temperiert. In den Rührkessel wurden unter Rühren (100 Umdrehungen pro Minute) kontinuierlich 376 g/h Styrol, 665 g/h der Kautschuklösung aus Beispiel K12 und eine Lösung aus 14,5 g/h einer 0,8 molaren Lösung von (n-Butyl)(s-butyl)magnesium in Heptan, die im Gew.-Verhältnis 1:4 mit Toluol verdünnt worden war, dosiert und bei einer konstanten Massetemperatur von 100,5°C gerührt.

Die Lösung wurde in einen gerührten 4 Liter Turmreaktor weitergefördert, der mit zwei gleich großen Heizzonen versehen war. Die erste Zone wurde auf eine Innentemperatur von 120,9°C, die zweite auf 160°C eingeregelt. Der Austrag des Reaktors wurde mit 11 g/h einer 50 gew.-%igen Lösung aus Methanol in Wasser versetzt, über einen Mischer und anschließend ein auf 240°C beheiztes Rohrstück geführt und über ein Druckregelventil in einen bei 10 mbar betriebenen Vakuumtopf entspannt. Die Schmelze wurde mit einer Schnecke ausgetragen und granuliert.

Nach kurzer Zeit stellte sich ein konstanter Fahrzustand ein. Der Feststoffgehalt betrug am Ausgang des ersten Kessels 35 Gew.-%. Am Austrag der kontinuierlichen Anlage wurde ein quantitativer Umsatz festgestellt. Die Polystyrol-Matrix besaß ein Molekulargewicht von Mw = 158000 g/mol und eine Uneinheitlichkeit Mw/Mn von 3,40; die Verteilung war monomodal.

Es wurde ein Gehalt von unter 5 ppm Styrol, unter 5 ppm Ethylbenzol bestimmt. Das Material besaß eine Streckspannung von 24,2 N/mm², eine Lochkerbschlagzähigkeit von 11,8 kJ/m², eine Wärmeformbeständigkeit (Vicat B/50) von 84,7°C und einen Meltfließindex von 6,6 cm³/10 min bei 200°C.

### Beispiel H11

Für die kontinuierliche Polymerisation wurde ein doppelwandiger, 1,9-l-Rührkessel mit einem Standard-Ankerrührer verwendet. Der Reaktor war für einen Druck von 25 bar ausgelegt und mit einem Wärmeträgermedium für eine isotherme Polymerisationsführung temperiert. In den Rührkessel wurden unter Rühren (100 Umdrehungen pro Minute) kontinuierlich 361 g/h Styrol, 688 g/h der Kautschuklösung aus Beispiel K13 und eine Lösung aus 14 g/h einer 0,8 molaren Lösung von (n-Butyl)(s-butyl)magnesium in Heptan, die im Gew.-Verhältnis 1:4 mit Toluol verdünnt worden war, dosiert und bei einer konstanten Massetemperatur von 93,6°C gerührt.

Die Lösung wurde in einen gerührten 4 Liter Turmreaktor weitergefördert, der mit zwei gleich großen Heizzonen versehen war. Die erste Zone wurde auf eine Innentemperatur von 122°C, die zweite auf 158,6°C eingeregelt. Der Austrag des Reaktors wurde mit 11 g/h einer 50 gew.-%igen Lösung aus Methanol in Wasser versetzt, über einen Mischer und anschließend ein auf 240°C beheiztes Rohrstück geführt und über ein Druckregelventil in einen bei 10 mbar betriebenen Vakuumtopf entspannt. Die Schmelze wurde mit einer Schnecke ausgetragen und granuliert.

Nach kurzer Zeit stellte sich ein konstanter Fahrzustand ein. Der Feststoffgehalt betrug am Ausgang des ersten Kessels 35,9 Gew.-%. Am Austrag der kontinuierlichen Anlage wurde ein quantitativer Umsatz festgestellt. Die Polystyrol-Matrix besaß ein Molekulargewicht von Mw = 188000 g/mol und eine Uneinheitlichkeit Mw/Mn von 2,98; die Verteilung war monomodal.

Es wurde ein Gehalt von unter 5 ppm Styrol, unter 5 ppm Ethylbenzol bestimmt. Das Material besaß eine Streckspannung von 29,6 N/mm², eine Lochkerbschlagzähigkeit von 14,9 kJ/m², eine Wärmeformbeständigkeit (Vicat B/50) von 92°C und einen Meltfließindex von 4,6 cm³/10 min bei 200°C.

## Patentansprüche

1. Schlagzähes Polystyrol erhältlich durch anionische Polymerisation von Styrol in Gegenwart eines unsymmetrischen Styrol-Butadien-Styrol Dreiblockcopolymeren S₁-B-S₂ mit einem Styrolgehalt von 5 bis 75 Gew.-%, wobei S₁ einen Styrolblock mit einem gewichtsmittleren Molekulargewicht M_{w} im Bereich von 10000 bis 40000 g/mol, B einen Butadienblock mit einem gewichtsmittleren Molekulargewicht M_{w} im Bereich von 70000 bis 250000 g/mol und S₂ einen Styrolblock mit einem gewichtsmittleren Molekulargewicht M_{w} im Bereich von 50000 bis 200000 g/mol bedeuten.

2. Schlagzähes Polystyrol nach Anspruch 1, **dadurch gekennzeichnet, daß** es eine ein Styrol-Butadien-Styrol-Dreiblockcopolymer enthaltende disperse Weichphase mit Zellteilchenmorphologie aufweist.

3. Schlagzähes Polystyrol nach Anspruch 1, **dadurch gekennzeichnet, dass** die Styrol-Butadien-Styrol-Dreiblockcopolymere einen Styrolgehalt von 25 bis 50 Gew.-% aufweisen.

4. Schlagzähes Polystyrol nach einem der Ansprüche 1 bis 3, **dadurch gekennzeichnet, daß** ein nach ISO 3167 hergestellter Probenkörper eine Streckspannung von mindestens 24 MPa, gemessen bei 23°C nach DIN 53455 und eine Lochkerbschlagzähigkeit von mindestens 11 kJ/m², gemessen bei 23°C nach DIN 53753, aufweist.

5. Schlagzähes Polystyrol nach einem der Ansprüche 1 bis 4, **dadurch gekennzeichnet, daß** der Gehalt an Styrolmonomeren maximal 50 ppm und der Gehalt an Styroldimeren- und Styroltrimeren maximal 500 ppm beträgt.

6. Schlagzähes Polystyrol nach einem der Ansprüche 1 bis 5, **dadurch gekennzeichnet, daß** der Gehalt an Ethylbenzol unter 5 ppm beträgt.

7. Schlagzähes Polystyrol nach einem der Ansprüche 1 bis 6, **dadurch gekennzeichnet, daß** es einen Gehalt an Mg im Bereich von 0,1 bis 100 mmol/kg und/oder einen Gehalt an Al im Bereich von 0,01 bis 50 mmol/kg, jeweils bezogen auf das schlagzähe Polystyrol aufweist.

8. Schlagzähes Polystyrol nach einem der Ansprüche 1 bis 7, **dadurch gekennzeichnet, daß** es 0,1 bis 10 Gew.-% Mineralöl enthält.

9. Verfahren zur Herstellung von schlagzähem Polystyrol durch anionische Polymerisation von Styrol in Gegenwart eines unsymmetrischen Styrol-Butadien-Styrol-Dreiblockcopolymeren S₁-B-S₂ mit einem Styrolgehalt von 5 bis 75 Gew.-% verwendet, wobei S₁ einen Styrolblock mit einem gewichtsmittleren Molekulargewicht M_{w} im Bereich von 10000 bis 40000 g/mol, B einen Butadienblock mit einem gewichtsmittleren Molekulargewicht M_{w} im Bereich von 70000 bis 250000 g/mol und S₂ einen Styrolblock mit einem gewichtsmittleren Molekulargewicht M_{w} im Bereich von 50000 bis 200000 g/mol bedeuten.

10. Verfahren zur Herstellung von schlagzähem Polystyrol nach Anspruch 9, **dadurch gekennzeichnet, daß** man die Polymerisation von Styrol in Gegenwart einer Trialkylaluminium- und/oder Dialkylmagnesiumverbindung durchführt.

11. Verfahren zur Herstellung von schlagzähem Polystyrol nach Anspruch 9 oder 10, **dadurch gekennzeichnet, daß** man die Polymerisation in Toluol als Lösungsmittel durchführt.

12. Verwendung von schlagzähem Polystyrol nach einem der Ansprüche 1 bis 8 zur Herstellung von Fasern, Folien und Formkörpern.

13. Fasern, Folien und Formkörper, hergestellt aus schlagzähem Polystyrol nach einem der Ansprüche 1 bis 8.

## Claims

1. An impact-modified polystyrene which can been obtained by anionic polymerization of styrene in the presence of an assymmetrical styrene-butadiene-styrene three-block copolymer S₁-B-S₂ with a styrene content of from 5 to 75% by weight, where S₁ is a styrene block with a weight-average molar mass M_{w} of from 10000 to 40000 g/mol, B is a butadiene block with a weight-average molar mass M_{w} of from 70000 to 250000 g/mol and S₂ is a styrene block with a weight-average molar mass M_{w} of from 50000 to 200000 g/mol.

2. An impact-modified polystyrene as claimed in claim 1, which has a disperse soft phase with cell-particle morphology and comprising a styrene-butadiene-styrene three-block copolymer.

3. An impact-modified polystyrene as claimed in claim 1, wherein the styrene-butadiene-styrene three-block copolymer has a styrene content of from 25 to 50% by weight.

4. An impact-modified polystyrene as claimed in any one of claims 1 to 3, wherein a specimen produced to ISO 3167 has a yield stress of at least 24 MPa, measured at 23°C to DIN 53455, and a hole notched impact strength of at least 11 kJ/m², measured at 23°C to DIN 53753.

5. An impact-modified polystyrene as claimed in any one of claims 1 to 4, wherein the content of styrene monomers is not more than 50 ppm and the content of styrene dimers and styrene trimers is not more than 500 ppm.

6. An impact-modified polystyrene as claimed in any one of claims 1 to 5, wherein the content of ethyl benzene is below 5 ppm.

7. An impact-modified polystyrene as claimed in any one of claims 1 to 6, which has a magnesium content of from 0.1 to 100 mmol/kg and/or an aluminum content of from 0.01 to 50 mmol/kg, in each case based on the impact-modified polystyrene.

8. An impact-modified styrene as claimed in any one of claims 1 to 7, which comprises from 0.1 to 10% by weight of mineral oil.

9. A process for preparing impact-modified polystyrene by anionic polymerization of styrene in the presence of an assymmetrical styrene-butadiene-styrene three-block copolymer S₁-B-S₂ with a styrene content of from 5 to 75% by weight, where S₁ is a styrene block with a weight-average molar mass M_{w} of from 10000 to 40000 g/mol, B is a butadiene block with a weight-average molar mass M_{w} of from 70000 to 250000 g/mol and S₂ is a styrene block with a weight-average molar mass M_{w} of from 50000 to 200000 g/mol.

10. A process for preparing impact-modified polystyrene as claimed in claim 9, wherein the polymerization of styrene is carried out in the presence of a trialkylaluminum compound and/or dialkylmagnesium compound.

11. A process for preparing impact-modified polystyrene as claimed in claim 9 or 10, where the polymerization is carried out in toluene as solvent.

12. The use of impact-modified polystyrene as claimed in any one of claims 1 to 8 for producing fibers, films or moldings.

13. A fiber, a film or a molding produced from impact-modified polystyrene as claimed in any one of claims 1 to 8.

## Revendications

1. Polystyrène résistant aux chocs que l'on peut obtenir par polymérisation anionique de styrène en présence d'un copolymère dissymétrique à trois blocs de styrène-butadiène-styrène S₁-B-S₂ présentant une teneur en styrène de 5 à 75% en poids, S₁ représentant un bloc de styrène ayant un poids moléculaire moyen pondéral M_{w} de l'ordre de 10.000 à 40.000 g/mole, B un bloc de butadiène ayant un poids moléculaire moyen pondéral M_{w} de l'ordre de 70.000 à 250.000 g/mole et S₂ un bloc de styrène ayant un poids moléculaire moyen pondéral M_{w} de l'ordre de 50.000 à 200.000 g/mole.

2. Polystyrène résistant aux chocs suivant la revendication 1, **caractérisé en ce qu'**il présente une phase molle dispersée à morphologie de particules cellulaires et contenant un copolymère à trois blocs de styrène-butadiène-styrène.

3. Polystyrène résistant aux chocs suivant la revendication 1, **caractérisé en ce que** les copolymères à trois blocs de styrène-butadiène-styrène présentent une teneur en styrène de 25 à 50% en poids.

4. Polystyrène résistant aux chocs suivant l'une des revendications 1 à 3, **caractérisé en ce qu'**une éprouvette préparée selon la norme ISO 3167 présente une tension d'étirage d'au moins 24 MPa, mesurée à 23°C selon la norme DIN 53455, et une résistance aux chocs sur éprouvette entaillée à trou d'au moins 11 kJ/m², mesurée à 23°C selon la norme DIN 53753.

5. Polystyrène résistant aux chocs suivant l'une des revendications 1 à 4, **caractérisé en ce que** la teneur en monomères de styrène est au maximum de 50 ppm et la teneur en dimères et trimères de styrène au maximum de 500 ppm.

6. Polystyrène résistant aux chocs suivant l'une des revendications 1 à 5, **caractérisé en ce que** la teneur en éthylbenzène est inférieure à 5 ppm.

7. Polystyrène résistant aux chocs suivant l'une des revendications 1 à 6, **caractérisé en ce qu'**il présente une teneur en Mg de l'ordre de 0,1 à 100 mmoles/kg et/ou une teneur en Al de l'ordre de 0,01 à 50 mmoles/kg, chaque fois par rapport au polystyrène résistant aux chocs.

8. Polystyrène résistant aux chocs suivant l'une des revendications 1 à 7, **caractérisé en ce qu'**il contient 0,1 à 10% en poids d'huile minérale.

9. Procédé de préparation de polystyrène résistant aux chocs par polymérisation anionique de styrène en présence d'un copolymère dissymétrique à trois blocs de styrène-butadiène-styrène S₁-B-S₂ ayant une teneur en styrène de 5 à 75% en poids, dans lequel S₁ représente un bloc de styrène ayant un poids moléculaire moyen pondéral M_{w} de l'ordre de 10.000 à 40.000 g/mole, B un bloc de butadiène ayant un poids moléculaire moyen pondéral M_{w} de l'ordre de 70.000 à 250.000 g/mole et S₂ un bloc de styrène ayant un poids moléculaire moyen pondéral M_{w} de l'ordre de 50.000 à 200.000 g/mole.

10. Procédé de préparation de polystyrène résistant aux chocs suivant la revendication 9, **caractérisé en ce qu'**on effectue la polymérisation de styrène en présence d'un composé de trialkyl-aluminium et/ou d'un composé de dialkyl-magnésium.

11. Procédé de préparation de polystyrène résistant aux chocs suivant la revendication 9 ou 10, **caractérisé en ce qu'**on effectue la polymérisation dans du toluène comme solvant.

12. Utilisation de polystyrène résistant aux chocs suivant l'une des revendications 1 à 8, pour la fabrication de fibres, de feuilles et de corps façonnés.

13. Fibres, feuilles et corps façonnés, préparés à partir de polystyrène résistant aux chocs suivant l'une des revendications 1 à 8.
